# EUROPÄISCHE PATENTSCHRIFT

(11) **EP 2 755 854 B1**
(45) Veröffentlichungstag und Bekanntmachung des Hinweises auf die Patenterteilung: **12.09.2018**
(21) Anmeldenummer: 12743887.7
(22) Anmeldetag: 18.07.2012
(51) Int. Cl.: B21K 25/00, B21K 1/04, B23P 15/00, B21K 21/12, B60N 2/68, B60N 2/225

(54) **VERFAHREN ZUR HERSTELLUNG EINES FAHRZEUGSITZ-BESCHLAGS**
METHOD FOR PRODUCING A VEHICLE SEAT FITTING
PROCÉDÉ DE FABRICATION D'UNE FERRURE DE SIÈGE DE VÉHICULE

(30) Priorität: 14.09.2011 DE 102011113748
(43) Veröffentlichungstag der Anmeldung: 23.07.2014
(73) Patentinhaber: Adient Luxembourg Holding S.à r.l., 1855 Luxembourg (LU)
(72) Erfinder: JOKIEL, Christian, 42579 Heiligenhaus (DE)
(74) Vertreter: Loock, Jan Pieter
(86) Internationale Anmeldenummer: PCT/EP2012/003029
(87) Internationale Veröffentlichungsnummer: WO 2013/037439

(56) Entgegenhaltungen:
- EP-A2- 1 852 212
- DE-A1-102007 036 537
- GB-A- 2 163 687

## Beschreibung

Die Erfindung betrifft ein Verfahren zur Herstellung eines Fahrzeugsitz-Beschlags mit den Merkmalen des Oberbegriffs des Anspruches 1.
In der DE 44 11 214 C2 wird beschrieben, wie die Gleitlagerbuchse in die Aufnahme des ersten Beschlagteils eingebracht wird. Hierzu wird in einem ersten Schritt das erste Beschlagteil in einem Halter eines Werkzeugs befestigt und die Gleitlagerbuchse auf einen Dorn des Werkzeugs gesetzt. In einem zweiten Schritt wird durch eine Relativbewegung von Dorn und Halter die Gleitlagerbuchse in die Aufnahme des ersten Beschlagteils eingepresst. Die Außenabmessung der Gleitlagerbuchse ist im Rahmen einer Presspassung etwas größer als die Innenabmessung der Aufnahme des ersten Beschlagteils gewählt, so dass Material verdrängt wird, welches sich an dem - bezüglich der Bewegung des Dorns - nacheilenden Ende der Gleitlagerbuchse ansammelt und als Axialsicherung Die DE 10 2007 036537 einen Fahrzeugsitz-Beschlags, bei dem eine Gleitlagerbuchse in axialer Richtung in eine Aufnahme eines ersten Beschlagteils eingepresst wird, wobei die eingepresste Gleitlagerbuchse einen radial abstehenden Sicherungsbereich aufweist, wobei der Sicherungsbereich nach dem Einpressen durch bördeln ausgebildet wird. Der Erfindung liegt die Aufgabe zu Grunde, ein Verfahren der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Ausbildung eines Sicherungsbereichs der Gleitlagerbuchse, welcher als Axialsicherung gegen ein Verschieben der Gleitlagerbuchse in axialer Richtung (vom zweiten Beschlagteil weg) wirkt, wobei der Sicherungsbereich vor oder nach dem Einpressen ausgebildet wird, hat den Vorteil, dass eine solche Axialsicherung nicht durch das Einpressen geschaffen werden muss, also toleranzunabhängiger wird. Radiale Überschneidungen der etwas größeren Gleitlagerbuchse und der etwas kleineren Aufnahme des ersten Beschlagteils können gering gehalten werden. Dies verringert den Kraftaufwand beim Einpressen.

Die Wandstärke der Gleitlagerbuchse, d.h. die Hälfte der Differenz zwischen Außendurchmesser und Innendurchmesser, beträgt weniger als 1,5 mm, insbesondere zwischen 0,3und 1,2 mm, vorzugsweise zwischen 0,8 und 1,1 mm, besonders bevorzugt 1,0 ± 0,05 mm.

Die Ausbildung des Sicherungsbereichs sowie eine etwaige Materialverdrängung beim Einpressen der Gleitlagerbuchse erfolgt ungeschnitten mittels eines stumpfen Zerquetschens des Materials der Gleitlagerbuchse, also im wesentlich der von der Gleitschicht abgewandten Randschicht des Rückens sowie eines der Enden der Gleitlagerbuchse. Dabei erfolgt die Ausbildung des Sicherungsbereichs und die Materialverdrängung vorzugsweise spanlos. Dadurch eignet sich das stumpfe Zerquetschen insbesondere für geringe Wandstärken der Gleitlagerbuchse, welche durch spanabhebende Verfahren, wie beispielsweise in der DE 10 2009 022 767 B3 sowohl für das Einpressen als auch für die Ausbildung des Sicherungsbereichs. beschrieben, in ihrer Funktion beeinträchtigt werden könnte.

Vorzugsweise erfolgt die Ausbildung des Sicherungsbereichs an dem beim Einpressen nacheilenden Ende. Das Material dieses nacheilenden Endes der Gleitlagerbuchse wird dann radial nach außen gedrängt, nämlich in die ringförmige Vertiefung, vorzugsweise mit rechteckigem oder dreieckigem Profil. Die Gleitlagerbuchse wird drehfest in das erste Beschlagteil eingepresst

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann (welches dann vorzugsweise ein am ersten Beschlagteil befestigter Umklammerungsring übergreift) und trotzdem ausreichend große Verbindungsbereiche am zweiten Beschlagteil zur Montage des Beschlags zur Verfügung stehen. Das Zahnrad am radial äußeren Rand des zweiten Beschlagteils wird dann vorzugsweise von einem am ersten Beschlagteil befestigten Umklammerungsring übergriffen. Die im wesentlichen flache Form des Umklammerungsrings benötigt gegenüber der bekannten L-förmig profilierten Ausbildung weniger Material, was zu einer Einsparung von Gewicht und Kosten führt.

Die Ausbildung der - gegenüber dem Zahnkranz separaten - Verzahnung an dem den Exzenter aufnehmenden ersten Beschlagteil erlaubt die Übernahme des Konzepts, den Exzenter im nicht-angetriebenen Zustand des Beschlags zu sperren, wie es aus der DE 195 48 809 C1 bekannt ist. Ohne das dort offenbarte Sperrelement würde es unter dynamischen Betriebsbedingungen, d.h. während der Fahrt, durch Rütteln und Stoßen zu Bewegungen der Keilsegmente kommen, was wiederum zu einer Relativbewegung der Beschlagteile führen könnte, dem sogenannten "Ablaufen". Das Sperrelement verhindert das Ablaufen, indem es einerseits mittels der Ränder von an ihm ausgebildeten Öffnungen und mittels Endfinger einer die Keilsegmente beaufschlagenden Feder die Keilsegmente festhält und andererseits mittels an ihm ausgebildeter Rastnasen mit einem der Beschlagteile zusammenwirkt.

Beim Prägen des Zahnkranzes entsteht auf dessen Kehrseite eine nach außen weisende Gegenverzahnung. Die vom Zahnkranz separate Ausbildung der Verzahnung ermöglicht eine bauraumsparende Anpassung der Geometrien von Sperrelement und Verzahnung.

Das Sperrelement weist vorzugsweise eine Ringform auf, beispielsweise aus zwei Bögen, und sitzt vorzugsweise auf einem Überstand einer Gleitlagerbuchse, mittels welcher das erste Beschlagteil den Exzenter aufnimmt. Entsprechende Federarme sorgen für einen Kraftschluss. Optional können Führungsabschnitte vorgesehen sein, welche die Lagerung auf dem Überstand verbessern. Eine einstückige Ausbildung aus Federstahl ermöglicht eine einfache Integration der Merkmale des Sperrelementes. Zum Zusammenwirken mit der Verzahnung des ersten Beschlagteils, welche vorzugsweise als Zahnkranz mit radial nach innen weisenden Zähnen ausgebildet ist, sind vorzugsweise Sperrnasen vorgesehen, die radial nach außen weisen. Zum Zusammenwirken mit dem Exzenter sind vorzugsweise Öffnungen vorgesehen, welche die Feder des vorzugsweise aus zwei Keilsegmenten bestehenden Exzenters durchdringt. Zum Zusammenwirken mit dem Mitnehmer sind vorzugsweise Stützfinger vorgesehen, welche der Mitnehmer mittels Anschlägen beaufschlagen kann.

Gegenüber Lösungen, bei denen das Sperrelement mit Verzahnungen an der Gleitlagerbuchse (DE 10 2007 010 078 B4) oder an einem Kragen der von der Gleitlagerbuchse ausgekleideten Aufnahme zusammenwirkt, besteht vorliegend der Vorteil, dass ein größerer Radius der Verzahnung einen größeren Hebelarm für das Sperrmoment definiert.

Das Sperrelement dient vorrangig dem Sperren des Beschlags unter dynamischen Belastungen. Der Grundanteil beim Sperren wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die vorzugsweise vorgesehenen Keilsegmente, welche den Exzenter definieren, dienen sowohl dem Sperren als auch dem Antreiben der Abwälzbewegung von Zahnrad und Zahnkranz.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

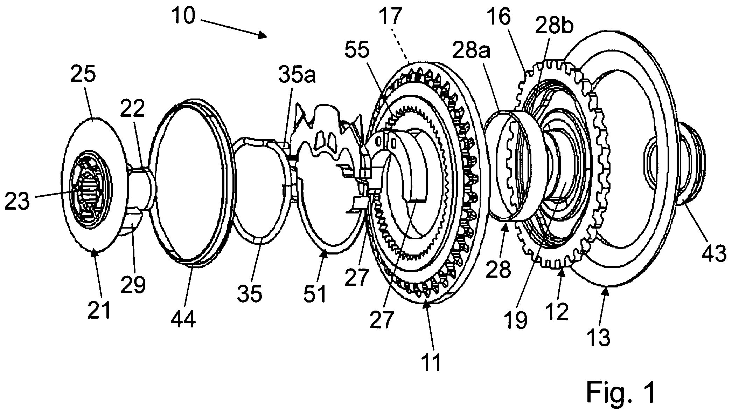

Im folgenden ist die Erfindung anhand eines in der Zeichnung dargestellten Ausführungsbeispiels näher erläutert. Es zeigen
- Fig. 1: eine Explosionsdarstellung des Beschlags,

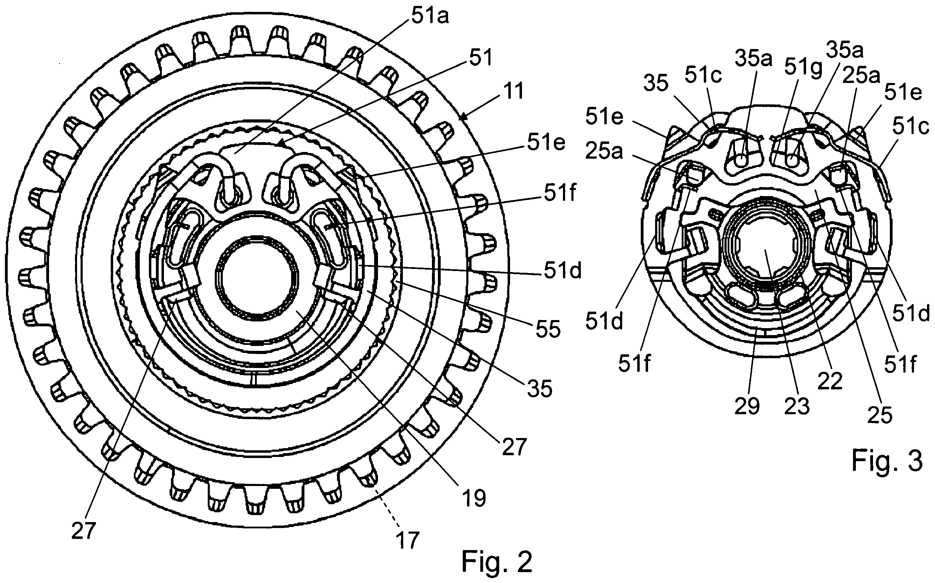

- Fig. 2: eine Teilansicht des Beschlags ohne Mitnehmer,
- Fig. 3: eine Ansicht von Mitnehmer, Feder und Sperrelement aus der entgegengesetzten Richtung zu Fig. 2,

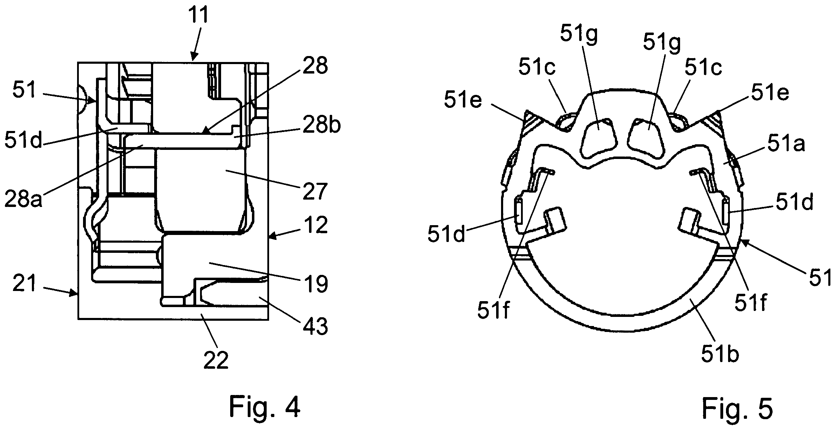

- Fig. 4: einen Teilschnitt durch den Beschlag,
- Fig. 5: eine Ansicht des Sperrelementes,

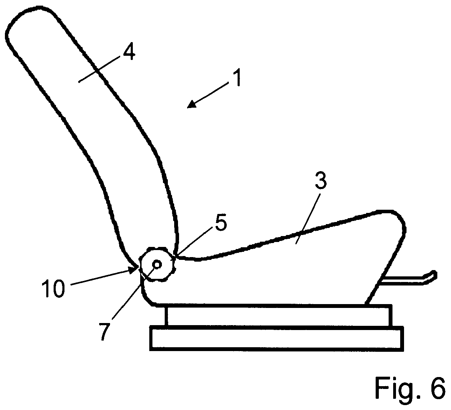

- Fig. 6: eine schematische Darstellung eines Fahrzeugsitzes,
- Fig. 7: einen Teilschnitt mit einer eingepressten Gleitlagerbuchse vor der Ausbildung ihres Sicherungsbereich am voreilenden Ende,
- Fig. 8: der Teilschnitt von Fig. 7 nach Ausbildung des Sicherungsbereichs, welcher in einer Vertiefung des ersten Beschlagteils angeordnet ist,
- Fig. 9: einen Teilschnitt beim Einpressen der Gleitlagerbuchse vor der Ausbildung ihres Sicherungsbereich am nacheilenden Ende,
- Fig. 10: der Teilschnitt von Fig. 9 nach Ausbildung des Sicherungsbereichs, welcher in einer Vertiefung des ersten Beschlagteils angeordnet ist,
- Fig. 11: einen Teilschnitt mit einer Gleitlagerbuchse, deren Sicherungsbereich vorgebildet ist, und
- Fig. 12: einen Teilschnitt mit einer Gleitlagerbuchse, deren Sicherungsbereich auf einer Stirnseite des ersten Beschlagteils aufliegt.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 A beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist noch als Sperrelement eine Sperrfeder 51 vorgesehen, wie sie beispielsweise in der DE 195 48 809 C1 offenbart ist. Die Sperrfeder 51 ist vorliegend einstückig aus Federstahl ausgebildet.

Die im wesentlichen ringförmige Sperrfeder 51 weist einen Grundbogen 51a, welcher in einer Ebene parallel zum ersten Beschlagteil 11 angeordnet ist, und einen Lagerbogen 51b, welcher in einer zum Grundbogen 51a versetzten Ebene angeordnet ist und sich beidseitig mittels jeweils einer Abkröpfung an den Grundbogen 51a unter Bildung der Ringform anschließt. Zwei Federarme 51c sind mit ihren freien Enden einander zugewandt und mit den von einander abgewandten Enden am Grundbogen 51a angeformt. Während der Grundbogen 51a und der Lagerbogen 51b größtenteils innerhalb der besagten beiden Ebenen in Umfangs- und in radialer Richtung liegen, erstrecken sich die beiden Federarme 51c in axialer Richtung zwischen den besagten beiden Ebenen. Vom Grundbogen 51a stehen optional zwei umgebogene, zylindrisch gekrümmte Führungabschnitte 51d ab, welche sich ebenfalls in axialer Richtung zwischen den besagten beiden Ebenen erstrecken. Schließlich weist die Sperrfeder 51 noch zwei Sperrnasen 51e auf, welche vom Grundbogen 51a radial (nach außen) abstehen, zwei Stützfinger 51f, welche vom Grundbogen 51a (oder alternativ vom Lagerbogen 51b) axial abstehen, und zwei Öffnungen 51g, welche im Grundbogen 51a ausgebildet sind.

Die Gleitlagerbuchse 28 weist vorzugsweise einen Stahl- oder Bronzerücken auf, welcher radial innen eine Gleitschicht trägt, beispielsweise PTFE in einer Zinn-Blei-Bronze (gesintert) eingewalzt. Die Gleitlagerbuchse 28 wird als Band hergestellt und zu einem Ring gerollt, wobei die Enden des Bandes beispielsweise stumpf geschweißt oder alternativ formschlüssig mittels einer Clinchverbindung oder einer Zinkung miteinander verbunden werden oder alternativ lediglich aneinander anliegen. Vor dem Einpressen in die Aufnahme des ersten Beschlagteils 11 beträgt vorliegend die axiale Abmessung 7,7 ± 0,2 mm, der Außendurchmesser 33,0 ± 0,05 mm und der Innendurchmesser 31,0 ± 0,05 mm, d.h. die Wandstärke b beträgt 1,0 ± 0,05 mm. An den Stirnseiten ist radial außen jeweils eine Fase mit einem Winkel von 20° ± 5° gegenüber der axialen Richtung und radial innen eine Kante mit eine Toleranz von - 0,1 bis-0,4 mm vorgesehen. Die axiale Abmessung der Fase beträgt 0,6 ± 0,2 mm, so dass sich eine Wandstärke b von mindestens 0,3 mm ergibt.

Die Gleitlagerbuchse 28 weist vorliegend eine größere axiale Abmessung als die von ihr ausgekleidete Aufnahme auf, so dass sie in axialer Richtung über das ihr zugeordnete Beschlagteil, also vorliegend das erste Beschlagteil 11, übersteht, was einen Überstand 28a definiert. Die Sperrfeder 51 stützt sich an dem Überstand 28a der Gleitlagerbuchse 28 ab, indem einerseits der Lagerbogen 51b und, falls vorhanden, die Führungsabschnitte 51d am Überstand 28a der Gleitlagerbuchse 28 anliegen, und andererseits auf der dem Lagerbogen 51b radial gegenüberliegenden Seite die Federarme 51c gegen den Überstand 28a der Gleitlagerbuchse 28 gespannt sind. Die Endfinger 35a der Feder 35 durchdringen die Öffnungen 51g.

Die Sperrfeder 51 wirkt mit einer zur Gleitlagerbuchse 28 konzentrischen und radial außerhalb derselben angeordneten Verzahnung 55 am ersten Beschlagteil 11 zusammen, deren Zähne radial nach innen weisen, d.h. die als weiterer Zahnkranz ausgebildet ist, vorliegend auf der Kehrseite des Zahnkranzes 17 und konzentrisch zu diesem. Die Sperrfeder 51 sperrt die Keilsegmente 27 im nicht-angetriebenen Zustand des Beschlags 10, indem die Sperrnasen in Eingriff mit der Verzahnung 55 stehen. Eine Bewegung der Keilsegmente 27 wird durch eine Anlage der Endfinger 35a der Feder 35 an die Ränder der jeweiligen Öffnungen 51g verhindert. Da die Öffnungen 51g größer als der Querschnitt der Endfinger 35a sind, erfolgt die Anlage erst nach einer - von den Toleranzen abhängigen - geringfügigen Bewegung wenigstens eines der Keilsegmente 27, d.h. nach einer geringfügigen Drehung des Exzenters.

Die Sperrfeder 51 wird durch den angetriebenen Mitnehmer 21 gelöst, indem dieser mittels eines Aussteuernockens 25a, welcher vorzugsweise an der Abdeckscheibe 25 ausgebildet ist, in Anlage an einen der Stützfinger 51f gelangt, wobei für jede Drehrichtung jeweils ein Aussteuernocken 25a und ein Stützfinger 51f vorgesehen sind. Wenn der Mitnehmer 21 den Stützfinger 51f beaufschlagt, beginnt er die Sperrnasen 51e aus der Verzahnung 55 zu ziehen, und zwar radial nach innen. Die auf der Gleitlagerbuchse 28 drehbar gelagerte Sperrfeder 51 dreht sich dann mit dem Mitnehmer 21 mit. Die von einander abgewandten Ränder der Öffnungen 51g verlaufen schräg zur radialen Richtung. Sobald der nacheilend angeordnete Endfinger 35a an den nacheilend angeordneten, schrägen Rand der zugeordneten Öffnung 51g gelangt, bewegt sich der Bereich der Sperrfeder 51 mit den Sperrnasen 51e, also der Grundbogen 51a, radial weiter nach innen. Die Sperrnasen 51e und die Verzahnung 55 kommen dann vollständig außer Eingriff. Zeitgleich oder danach kommt das Mitnehmersegment 29 in Anlage an das nacheilende der beiden Keilsegmente 27, worauf der Exzenter beginnt, sich zu drehen (umzulaufen). Wird der Mitnehmer 21 gestoppt, so bringen die Federarme 51c die Sperrnasen 51e wieder in Eingriff mit der Verzahnung 55, so dass die Keilsegmente 27 wieder gesperrt sind.

Die Gleitlagerbuchse 28 weist an dem vom Überstand 28a abgewandten Ende einen radial vorstehenden Sicherungsbereich 28b auf, welcher als Axialsicherung gegen ein Verschieben der Gleitlagerbuchse 28 in axialer Richtung vom zweiten Beschlagteil 12 weg wirkt. In axialer Richtung auf das zweite Beschlagteil 12 zu wirkt letzteres als Axialsicherung gegen ein Verschieben der Gleitlagerbuchse 28. Zur Einbringung der Gleitlagerbuchse 28 in die Aufnahme des ersten Beschlagteils 11 wird in einem ersten Schritt das erste Beschlagteil 11 auf einen Halter H eines Werkzeugs aufgelegt und vorzentriert und die Gleitlagerbuchse 28 auf einen Dorn D des Werkzeugs gesetzt. In einem zweiten Schritt wird durch eine Relativbewegung von Dorn D und (dem das erste Beschlagteil 11 aufnehmenden) Halter H die Gleitlagerbuchse 28 in die Aufnahme des ersten Beschlagteils eingepresst. Die Außenabmessung der Gleitlagerbuchse 28 ist im Rahmen einer Presspassung gleich oder vorzugsweise (zum Toleranzausgleich) etwas größer als die Innenabmessung der Aufnahme des ersten Beschlagteils 11 gewählt, so dass diese Presspassung die Axialsicherung unterstützt. Das Material des ersten Beschlagteils 11 ist aufgrund eines zuvor durchgeführten Härtungsvorgangs vorzugsweise härter als das Material der Gleitlagerbuchse 28. Eventuell überschüssiges Material, welches aufgrund der Unterschiede der Abmessung beim Einpressen verdrängt wird, sammelt sich an dem - bezüglich der Bewegung des Dorns D - nacheilenden Ende der Gleitlagerbuchse 28 an.

Die Verdrängung des Materials der Gleitlagerbuchse 28 bei deren Einpressen in die Aufnahme des ersten Beschlagteils 11 erfolgt ungeschnitten mittels eines stumpfen Zerquetschen des Materials der Gleitlagerbuchse 28. Dies unterscheidet sich von einem Abschaben, d.h. einem spanbildenden Schneiden, wie es beispielsweise in der DE 10 2009 022 767 B3 offenbart ist. Während letzteres Verfahren wegen der Spanbildung nur bei ausreichend großen Wandstärken b der Gleitlagerbuchse 28 angewandt werden kann, ist es mit dem vorliegenden Verfahren möglich, auch Gleitlagerbuchsen 28 mit geringeren Wandstärken b, insbesondere zwischen 0,3 und 1,1 mm, einzupressen, und zwar vorzugsweise spanlos.

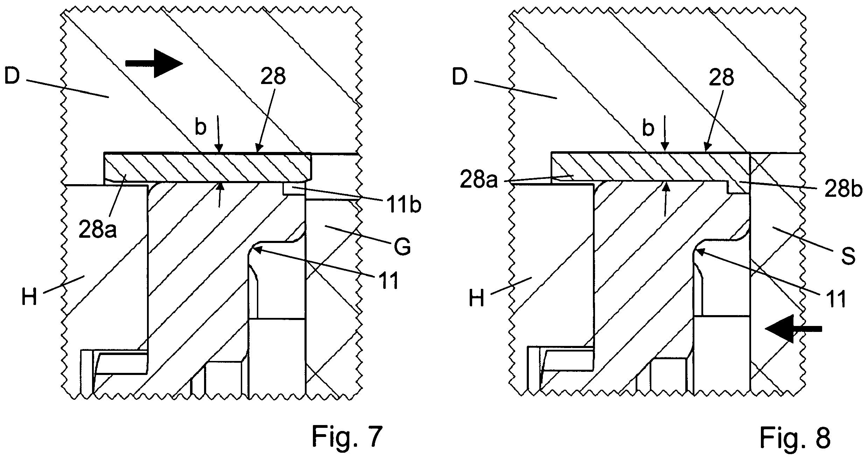

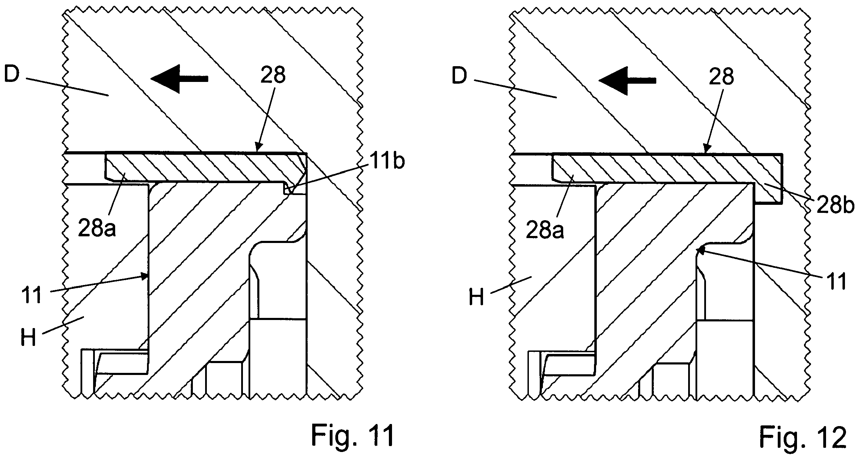

Um den Sicherungsbereich 28b herzustellen, existieren mehrere Möglichkeiten. Dabei kann der hergestellte Sicherungsbereich 28b in einer ringförmigen Vertiefung 11b des ersten Beschlagteils 11 um die Aufnahme für die Gleitlagerbuchse 28 herum angeordnet werden (Fig. 8, 10, 11), oder er kann auf der Stirnfläche des ersten Beschlagteils 11 aufliegen (Fig. 12), d.h. axial überstehen. Die ringförmige Vertiefung 11b kann ein rechteckiges Profil (Fig. 7 bis 9) oder ein dreieckiges (V-förmiges) Profil aufweisen. In letzterem Fall ist die ringförmige Vertiefung 11b eine Fase am Ende der Aufnahme für die Gleitlagerbuchse 28.

Der Sicherungsbereich 28b kann an dem - bezüglich der Bewegung der Gleitlagerbuchse 28 - vorauseilenden Ende der Gleitlagerbuchse 28 ausgebildet werden. Hierzu wird das erste Beschlagteil 11 im oben genannten ersten Schritt zwischen dem Halter H und einem Gegenhalter G eingespannt. Die Gleitlagerbuchse 28 wird im oben genannten zweiten Schritt so weit eingepresst, dass am nacheilenden Ende der Überstand 28a und am vorauseilenden Ende ein weiterer Überstand entsteht (Fig. 7). Das Material dieses weiteren Überstands wird dann in einem dritten Schritt umgeformt, indem es radial nach außen gedrängt wird, beispielsweise mittels eines Stempels S, welcher anstelle des Gegenhalters G vorgesehen und relativ zum Dorn D bewegt wird, während der Halter H und der Dorn D relativ zueinander unbewegt bleiben. Durch das Umformen entsteht der Sicherungsbereich 28b (Fig. 8). Das vorliegend verwendete, auf einem stumpfen Zerquetschen beruhende Verfahren hat gegenüber einem Umformen mittels einer Ringzacke oder eines anderen Schnittelementes am Stempel S den Vorteil, dass ein geringerer Werkzeugverschleiß auftritt.

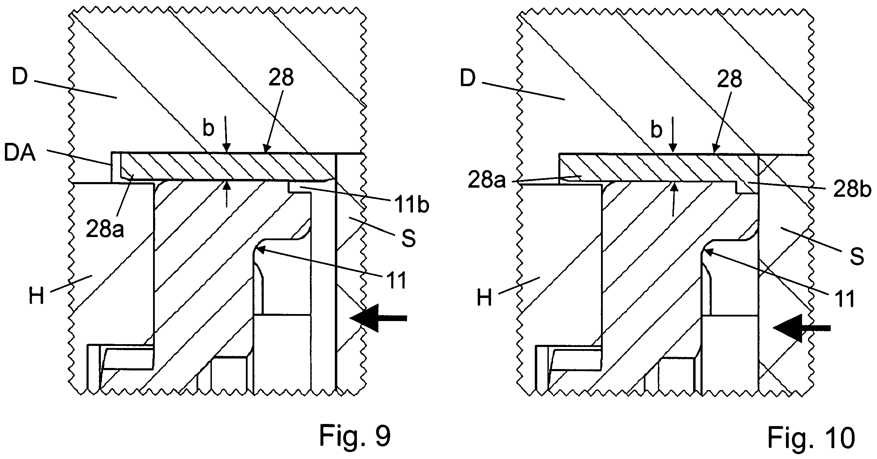

Alternativ kann der Sicherungsbereich 28b an dem - bezüglich der Bewegung der Gleitlagerbuchse 28 - nacheilenden Ende der Gleitlagerbuchse 28 ausgebildet werden. Dabei sind zwei Varianten möglich. In der einen Variante (Fig. 9, 10) wird der Sicherungsbereichs 28b nachträglich ausgebildet. Die auf dem ruhenden Dorn D angeordnete Gleitlagerbuchse 28 wird im oben genannten zweiten Schritt (Fig. 9) mittels eines Stempels S so weit eingepresst, dass sie am voreilenden Ende mit ihrem Überstand 28a in Anlage an einen Anschlag DA am Dorn D gelangt und am nacheilenden Ende ein weiterer Überstand entsteht. Das Material dieses weiteren Überstands wird dann in einem dritten Schritt (welcher sich nahtlos an den zweiten Schritt anschließt) umgeformt, indem es radial nach außen gedrängt wird, vorliegend mittels des Stempels S oder alternativ mittels eines Schlages, Taumelnieten o.ä., so dass der Sicherungsbereich 28b mittels stumpfen Zerquetschens entsteht (Fig. 10). Die verschiedenen, beschriebenen Schritte können auch zu einem oder mehreren Schritten kombiniert sein.

In der anderen Variante (Fig. 11, 12) ist der Sicherungsbereich 28b bereits vor dem Einpressen an der Gleitlagerbuchse 28 vorgebildet (Fig. 11) oder fertig ausgebildet (Fig. 12). Gegenüber dem Halter H bewegt sich der Dorn D in der entgegengesetzten Richtung wie in Fig. 7. Soweit der Sicherungsbereich 28b vor dem Einpressen nur vorgebildet ist, wird die Gleitlagerbuchse 28 im zweiten Schritt eingepresst bis am voreilenden Ende der Überstand 28a und am nacheilenden Ende ein weiterer Überstand entsteht (Fig. 11), wenigstes bezüglich der ringförmigen Vertiefung 11b. Im dritten Schritt wird das Material des vorgebildeten Sicherungsbereichs 28b umgeformt, beispielsweise mittels eines Stempels, bis dieser fertig ausgebildet ist, d.h. radial absteht in der Art eines Bundes. Dieses Umformen kann beispielsweise erfolgen, indem der Halter H die Gleitlagerbuchse 28 abstützt und der Dorn D sich weiterbewegt. Der Dorn D weist hierbei eine Umformkontur auf, welche das stumpfes Zerquetschen des vorgebildeten Sicherungsbereichs 28b bewirkt. Das Umformen kann beispielsweise auch mittels eines separaten Stempels erfolgen. Die ringförmige Vertiefung 11b kann als Gegenstempel dienen. Soweit der Sicherungsbereich 28b vor dem Einpressen bereits fertig ausgebildet ist, beispielsweise als ein (radial abstehender) Bund, wird die Gleitlagerbuchse 28 im zweiten Schritt eingepresst bis am voreilenden Ende der Überstand 28a entsteht und am nacheilenden Ende der Sicherungsbereich 28b seine Endposition erreicht, d.h. in der ringförmigen Vertiefung 11b zu liegen kommt (Endposition der Gleitlagerbuchse 28 wie in Fig. 10) oder auf der Stirnseite des ersten Beschlagteils 11 aufliegt (Fig. 12).

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 11b: ringförmige Vertiefung
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 25a: Aussteuernocken
- 27: Keilsegment
- 28: Gleitlagerbuchse
- 28a: Überstand
- 28b: Sicherungsbereich
- 29: Mitnehmersegment
- 35: Feder
- 35a: Endfinger
- 43: Sicherungsring
- 44: Dichtring
- 51: Sperrfeder, Sperrelement
- 51a: Grundbogen
- 51b: Lagerbogen
- 51c: Federarm
- 51d: Führungsabschnitt
- 51e: Sperrnase
- 51f: Stützfinger
- 51g: Öffnung
- 55: Verzahnung
- b: Wandstärke
- D: Dorn
- DA: Anschlag
- G: Gegenhalter
- H: Halter
- S: Stempel

## Patentansprüche

1. Verfahren zur Herstellung eines Fahrzeugsitz-Beschlags (10), bei dem eine Gleitlagerbuchse (28) in axialer Richtung in eine Aufnahme eines ersten Beschlagteils (11) eingepresst wird, wobei die eingepresste Gleitlagerbuchse (28) einen radial abstehenden Sicherungsbereich (28b) aufweist, wobei der Sicherungsbereich (28b) vor oder nach dem Einpressen ausgebildet wird, indem Material der Gleitlagerbuchse (28) ungeschnitten verdrängt wird, und dass die Wandstärke (b) der Gleitlagerbuchse (28) weniger als 1,5 mm beträgt, wobei bei der Ausbildung des Sicherungsbereichs (28b) das Material der Gleitlagerbuchse (28) in eine ringförmige Vertiefung (11b) des ersten Beschlagteils (11) verdrängt wird.

2. Verfahren nach Anspruch 1, **dadurch gekennzeichnet, dass** der Sicherungsbereich (28b) an dem beim Einpressen vorauseilenden Ende ausgebildet wird, indem nach dem Einpressen Material der Gleitlagerbuchse (28) radial nach außen gedrängt wird.

3. Verfahren nach Anspruch 1, **dadurch gekennzeichnet, dass** der Sicherungsbereich (28b) an dem beim Einpressen nacheilenden Ende fertig ausgebildet wird, indem nach dem Einpressen Material der Gleitlagerbuchse (28) radial nach außen gedrängt wird.

4. Verfahren nach Anspruch 3, **dadurch gekennzeichnet, dass** der Sicherungsbereich (28b) vor dem Einpressen der Gleitlagerbuchse (28) vorzugsweise bereits vorgebildet ist, oder dass der Sicherungsbereich (28b) vor dem Einpressen der Gleitlagerbuchse (28) bereits an dem beim Einpressen nacheilenden Ende fertig ausgebildet wird.

5. Verfahren nach einem der vorhergehenden Ansprüche, **dadurch gekennzeichnet, dass** nach dem Einpressen der Gleitlagerbuches (28) der Sicherungsbereich (28b) in einer Vertiefung (11b) des ersten Beschlagteils (11) angeordnet ist oder auf der Stirnseite des ersten Beschlagteils (11) aufliegt.

6. Verfahren nach einem der vorhergehenden Ansprüche, **dadurch gekennzeichnet, dass** vorzugsweise das Profil der ringförmigen Vertiefung (11b) rechteckig oder dreieckig ist.

7. Verfahren nach einem der vorhergehenden Ansprüche, **dadurch gekennzeichnet, dass** die Wandstärke (b) der Gleitlagerbuchse (28) zwischen 0,3und 1,2 mm, vorzugsweise zwischen 0,8 und 1,1 mm, besonders bevorzugt 1,0 ± 0,05 mm, beträgt.

8. Verfahren nach einem der vorhergehenden Ansprüche, **dadurch gekennzeichnet, dass** an dem vom Sicherungsbereich (28b) abgewandten Ende der Gleitlagerbuchse (28) nach dem Einpressen ein axialer Überstand (28a) ausgebildet ist.

9. Verfahren nach einem der vorhergehenden Ansprüche, **dadurch gekennzeichnet, dass** die eingepresste Gleitlagerbuchse (28) einen Exzenter (27, 27) aufnimmt, der sich an einem zweiten Beschlagteil (12) abstützt, welches mit dem ersten Beschlagteil (11) in Getriebeverbindung steht mittels eines Zahnrades (16) und eines Zahnkranzes (17), die miteinander kämmen, und der von einem Mitnehmer (21) angetrieben umlaufend eine relative Abwälzbewegung von Zahnrad (16) und Zahnkranz (17) antreibt, wobei insbesondere ein Sperrelement (51) vorgesehen ist, welches den Exzenter (27, 27) im nicht-angetriebenen Zustand des Beschlags (10) durch Zusammenwirken mit einer am ersten Beschlagteil (11) ausgebildeten Verzahnung (55) sperrt und welches den Exzenter (27, 27) bei Antrieb durch den Mitnehmer (21) freigibt, wobei das Sperrelement (51) insbesondere auf einem axialen Überstand (28a) der Gleitlagerbuchse (28) gelagert ist.

10. Beschlag (10), der nach einem Verfahren nach einem der vorhergehenden Ansprüche hergestellt ist, und der mit einem von zwei Beschlagteilen (11, 12) mit einem Sitzteil (3) eines Fahrzeugsitzes (1) und mit dem anderen den beiden Beschlagteile (11, 12) mit einer Lehne (4) des Fahrzeugsitzes (1) verbunden ist.

## Claims

1. Method for producing a vehicle seat fitting (10), wherein a plain bearing bush (28) is pressed in an axial direction into a receiving member of a first fitting member (11), wherein the pressed-in plain bearing bush (28) has a radially protruding securing region (28b), wherein the securing region (28b) is formed before or after the pressing-in operation by material of the plain bearing bush (28) being displaced in a non-cutting manner, and in that the wall thickness (b) of the plain bearing bush (28) is less than 1.5 mm, wherein, when the securing region (28b) is formed, the material of the plain bearing bush (28) is displaced into an annular recess (11b) of the first fitting member (11).

2. Method according to Claim 1, **characterized in that** the securing region (28b) is formed at the leading edge during the pressing-in operation by material of the plain bearing bush (28) being displaced radially outward after the pressing-in operation.

3. Method according to Claim 1, **characterized in that** the securing region (28b) is completely formed at the trailing end during the pressing-in operation by material of the plain bearing bush (28) being displaced radially outward after the pressing-in operation.

4. Method according to Claim 3, **characterized in that** the securing region (28b) is preferably already preformed before the plain bearing bush (28) is pressed in, or **in that** the securing region (28b) is already completely formed before the plain bearing bush (28) is pressed in at the trailing end during the pressing-in operation.

5. Method according to one of the preceding claims, **characterized in that**, after the pressing-in of the plain bearing bush (28), the securing region (28b) is arranged in a recess (11b) of the first fitting member (11) or rests on the end face of the first fitting member (11).

6. Method according to one of the preceding claims, **characterized in that** the profile of the annular recess (11b) is preferably rectangular or triangular.

7. Method according to one of the preceding claims, **characterized in that** the wall thickness (b) of the plain bearing bush (28) is between 0.3 and 1.2 mm, preferably between 0.8 and 1.1 mm, in a particularly preferred manner 1.0 ± 0.05 mm.

8. Method according to one of the preceding claims, **characterized in that** an axial projection (28a) is formed at the end of the plain bearing bush (28) facing away from the securing region (28b) after the pressing-in operation.

9. Method according to one of the preceding claims, **characterized in that** the pressed-in plain bearing bush (28) receives an eccentric member (27, 27) which is supported on a second fitting member (12) which is connected in a geared manner to the first fitting member (11) by means of a toothed wheel (16) and a toothed ring (17) which mesh with each other, and which, in a state driven by a carrier (21), rotatably drives a relative rolling movement of the toothed wheel (16) and toothed ring (17), wherein there is provided in particular a locking element (51) which locks the eccentric member (27, 27) in the non-driven state of the fitting (10) by means of cooperation with a tooth arrangement (55) which is formed on the first fitting member (11) and which releases the eccentric member (27, 27) when driven by the carrier (21), wherein the locking element (51) in particular is supported on an axial projection (28a) of the plain bearing bush (28).

10. Fitting (10) which is produced in accordance with a method according to one of the preceding claims, and which is connected by means of one of two fitting members (11, 12) to a seat member (3) of a vehicle seat (1) and by means of the other of the two fitting members (11, 12) to a backrest (4) of the vehicle seat (1).

## Revendications

1. Procédé de fabrication d'une ferrure de siège de véhicule (10), dans lequel on enfonce un coussinet de palier lisse (28) en direction axiale dans un logement d'une première partie de ferrure (11), dans lequel le coussinet de palier lisse enfoncé (28) présente une région de fixation saillante radialement (28b), dans lequel on forme la région de fixation (28b) avant ou après l'enfoncement, par le fait que l'on déplace de la matière du coussinet de palier lisse (28) non coupée, et en ce que l'épaisseur de paroi (b) du coussinet de palier lisse (28) vaut moins de 1,5 mm, dans lequel lors de la formation de la région de fixation (28b) on déplace la matière du coussinet de palier lisse (28) dans une cavité annulaire (11b) de la première partie de ferrure (11).

2. Procédé selon la revendication 1, **caractérisé en ce que** l'on forme la région de fixation (28b) sur l'extrémité située en avant lors de l'enfoncement, par le fait que l'on déplace de la matière du coussinet de palier lisse (28) radialement vers l'extérieur après l'enfoncement.

3. Procédé selon la revendication 1, **caractérisé en ce que** l'on réalise la région de fixation (28b) sur l'extrémité située en arrière lors de l'enfoncement, par le fait que l'on déplace de la matière du coussinet de palier lisse (28) radialement vers l'extérieur après l'enfoncement.

4. Procédé selon la revendication 3, **caractérisé en ce que** l'on préforme de préférence déjà la région de fixation (28b) avant l'enfoncement du coussinet de palier lisse (28), ou **en ce que** l'on réalise déjà la région de fixation (28b) sur l'extrémité située en arrière avant l'enfoncement du coussinet de palier lisse (28).

5. Procédé selon l'une quelconque des revendications précédentes, **caractérisé en ce qu'**après l'enfoncement du coussinet de palier lisse (28) la région de fixation (28b) est disposée dans une cavité (11b) de la première partie de ferrure (11) ou s'applique sur le côté frontal de la première partie de ferrure (11).

6. Procédé selon l'une quelconque des revendications précédentes, **caractérisé en ce que**, dans lequel le profil de la cavité annulaire (11b) est de préférence rectangulaire ou triangulaire.

7. Procédé selon l'une quelconque des revendications précédentes, **caractérisé en ce que** l'épaisseur de paroi (b) du coussinet de palier lisse (28) vaut entre 0,3 et 1,2 mm, de préférence entre 0,8 et 1,1 mm, et de préférence encore 1,0 ± 0,05 mm.

8. Procédé selon l'une quelconque des revendications précédentes, **caractérisé en ce qu'**un débordement axial (28a) est formé après l'enfoncement sur l'extrémité du coussinet de palier lisse (28) éloignée de la région de fixation (28b).

9. Procédé selon l'une quelconque des revendications précédentes, **caractérisé en ce que** le coussinet de palier lisse enfoncé (28) contient un excentrique (27, 27), qui prend appui sur une deuxième partie de ferrure (12), qui est en liaison d'entraînement avec la première partie de ferrure (11) au moyen d'une roue dentée (16) et d'une couronne dentée (17), qui sont en prise l'une avec l'autre, et qui, entraîné par un organe d'entraînement (21), entraîne en rotation un mouvement de roulement relatif de la roue dentée (16) et de la couronne dentée (17), dans lequel il est prévu en particulier un élément d'arrêt (51), qui bloque l'excentrique (27, 27) dans l'état non entraîné de la ferrure (10) en coopérant avec une denture (55) formée sur la première partie de ferrure (11) et qui libère l'excentrique (27, 27) lors de l'entraînement par l'organe d'entraînement (21), dans lequel l'élément d'arrêt (51) est monté en particulier sur un débordement axial (28a) du coussinet de palier lisse (28).

10. Ferrure (10), qui est fabriquée par un procédé selon l'une quelconque des revendications précédentes, et qui est reliée par une de deux parties de ferrure (11, 12) à une partie de siège (3) d'un siège de véhicule (1) et par l'autre des deux parties de ferrure (11, 12) à un dossier (4) du siège de véhicule (1).
